# EUROPÄISCHE PATENTSCHRIFT

(11) **EP 2 068 136 B1**
(45) Veröffentlichungstag und Bekanntmachung des Hinweises auf die Patenterteilung: **20.02.2019**
(21) Anmeldenummer: 07122107.1
(22) Anmeldetag: 03.12.2007
(51) Int. Cl.: G01J 3/50, G01J 3/02, F16M 13/00, A45F 5/02, F16M 13/02

(54) **Haltevorrichtung für ein mobiles Farbmessgerät**
Holding device for a mobile chromatometer
Dispositif de maintien pour un appareil de mesure mobile

(43) Veröffentlichungstag der Anmeldung: 10.06.2009
(73) Patentinhaber: X-Rite Switzerland GmbH, 8105 Regensdorf (CH)
(72) Erfinder: Danhamer, Bernd, 8166 Niederweningen (CH); Diethelm, Stefan, 8712 Staefa (CH)
(74) Vertreter: SSM Sandmair

(56) Entgegenhaltungen:
- GB-A- 917 360
- GB-A- 2 188 544
- US-A- 6 030 085
- US-A1- 2003 058 448
- US-A1- 2005 137 063
- US-B2- 7 064 831

## Beschreibung

Die Erfindung betrifft eine Vorrichtung zur Halterung eines mobilen Farbmessgeräts an einem Messobjekt, insbesondere einem Monitor.

Zur Ausmessung und Kalibrierung von Farbmonitoren oder vergleichbaren Geräten werden heute vorzugsweise mobile Farbmessgeräte eingesetzt. Beispiele dafür sind die Geräte ColorMunki und Spectrolino der Firma X-Rite Europe AG, Regensdorf, Schweiz.

Die Positionierung und Halterung des Farbmessgeräts an der meist vertikalen oder stark geneigten Leuchtfläche des Monitors ist mit gewissen Schwierigkeiten verbunden. Einerseits soll das Farbmessgerät sicher in seiner Position fixiert sein, und anderseits soll es aber auch schnell und einfach an andere Messstellen auf dem Monitor verbracht werden können.

Gemäss dem Dokument US 7,064,831 B2 wird das Farbmessgerät an seinem Stromversorgungskabel vor den Monitor gehängt. Das Kabel wird über den Monitor gelegt und ist mit einem verstellbaren Gewicht versehen, welches das Kabel und das daran aufgehängte Farbmessgerät fixiert. Diese Lösung ist für kabellose Farbmessgeräte natürlich nicht geeignet.

Es ist auch schon bekannt, Farbmessgeräte mit einem oder mehreren Saugnäpfen am auszumessenden Monitor zu positionieren. Diese Lösung ist jedoch für viele Anwendungszwecke schlecht geeignet, insbesondere weil die Feinjustierung auf die Messstelle schwierig ist und der Wechsel zu einer anderen Messstelle auf diese Weise relativ umständlich und zeitraubend ist. Da ausserdem relativ starke auf den Monitor wirkende Saugkräfte erforderlich sind, stösst diese Lösung oft auf Ablehnung. Aus US6030085 und GB2188544 ist es allgemein bekannt, mit fliessfähigem Material befüllte Beutel als Halterungen zu verwenden.

Ausgehend von diesem Stand der Technik soll durch die vorliegende Erfindung eine Vorrichtung zur Halterung eines mobilen Farbmessgeräts an einem Messobjekt, insbesondere einem Monitor geschaffen werden, welche eine einfache und bequeme Positionierung des Farbmessgeräts erlaubt und auch für kabellose Farbmessgeräte geeignet ist. Ferner sollen nur relativ kleine auf den Monitor wirkende Kräfte erforderlich sein.

Diese der Erfindung zugrundeliegende Aufgabe wird durch die im kennzeichnenden Teil des unabhängigen Anspruchs angeführten konstruktiven Massnahmen gelöst. Weiterbildungen und besonders vorteilhafte Ausgestaltungen der Erfindung sind Gegenstand der abhängigen Ansprüche.

Im Folgenden wird ein Ausführungsbeispiel der erfindungsgemässen Haltevorrichtung anhand der Zeichnung näher erläutert. In der Zeichnung zeigen:
- Fig. 1: eine Haltevorrichtung zusammen mit einem mobilen Farbmessgerät,
- Fig. 2: den Traggurt der Haltevorrichtung in seitlicher Ansicht,
- Fig. 3: einen etwas vergrösserten Schnitt durch den Traggurt nach der Linie III-III der Fig. 2,
- Fig. 4: den Traggurt der Haltevorrichtung in verkürztem Zustand und
- Fig. 5-6: die Haltevorrichtung im praktischen Einsatz an verschiedenen Monitoren.

Die dargestellte erfindungsgemässe Haltevorrichtung umfasst eine Tasche T zur Aufnahme eines in der Figur separat dargestellten mobilen Farbmessgeräts MD und einen im wesentlichen flexiblen Traggurt G, der an der Tasche T mittels eines bügel- oder hakenförmigen Befestigungsorgans 1 befestigt ist. Die Tasche T ist mit diversen Bedienungs- und Messöffnungen versehen, die den Zugriff auf die Bedienungsorgane des Farbmessgeräts erlauben und durch welche hindurch die Messung erfolgt. Die Tasche T weist einen Reissverschluss 2 mit beweglicher Schliesse 2a auf, so dass das Farbmessgerät MD bequem in die Tasche eingelegt bzw. wieder aus dieser entnommen werden kann. Das Befestigungsorgan 1 des Traggurts G ist in die Schliesse 2a des Reissverschlusses eingehängt. Das Befestigungsorgan 1 kann ein passend geformter Drahtbügel sein und beispielsweise auch einen Karabinerhaken aufweisen, so dass der Traggurt G bei Bedarf einfach von der Tasche T abgenommen werden kann.

In einer alternativen Ausführungsform ist keine Tasche vorgesehen und der Traggurt G ist mittels seines Befestigungsorgans 1 direkt an einer Öse oder dgl. am Farbmessgerät MD befestigt bzw. befestigbar.

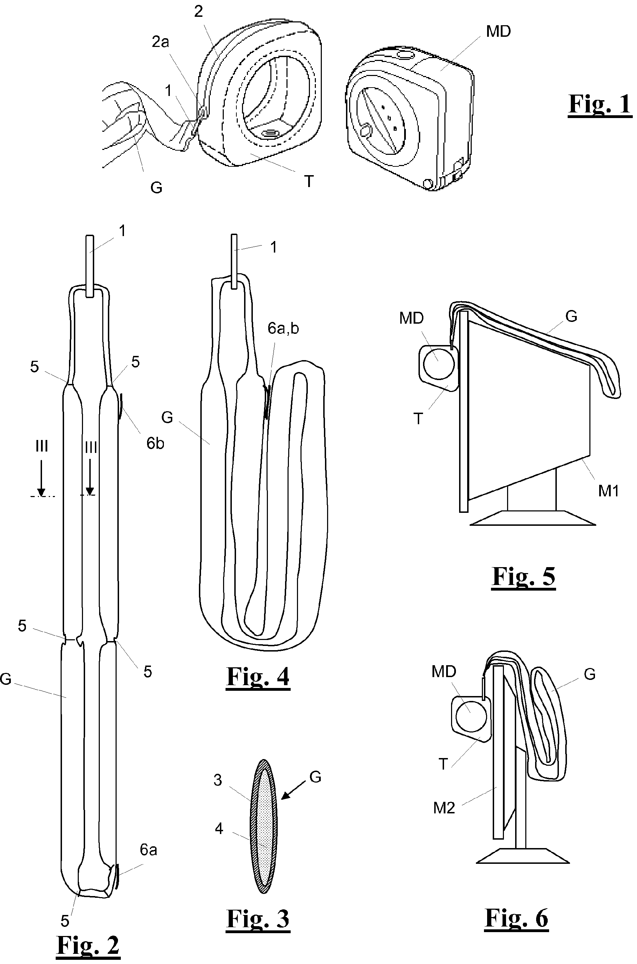

Der in Figur 1 nur teilweise sichtbare Traggurt G ist in den Figuren 2-4 detaillierter dargestellt. Er ist im Wesentlichen schlauchförmig ausgebildet und besteht vorzugsweise aus einem Kunststoffgewebe 3, wie es für die Herstellung von Trag- und Spanngurten verwendet wird. Vorzugsweise ist der Traggurt G zu einer geschlossenen Schlaufe geformt, wie es die Fig. 2 zeigt. Der Traggurt G ist über den grössten Teil seiner Länge mit einem vorzugsweise fliessfähigen Beschwerungsmaterial 4 gefüllt, welches dem Traggurt G ein gegenüber dem reinen Gurtmaterial erhöhtes Eigengewicht verleiht (Fig. 3). Als Beschwerungsmaterial 4 kommt zum Beispiel Sand oder ein anderes körniges Material relativ hohen spezifischen Gewichts zum Einsatz. Alternativ kann auch ein flüssiges oder gelartiges Beschwerungsmaterial eingesetzt werden, z.B. Wasser oder ein passendes Gel in einem oder mehreren flüssigkeitsdichten Beuteln. Der Befüllungsgrad des Traggurts ist so gewählt, dass der Traggurt G noch ausreichend flexibel ist. Diverse Unterteilungen (Abnäher) 5 im Traggurt T sorgen dafür, dass sich das Beschwerungsmaterial 4 nicht unerwünscht verschiebt und dass der Traggurt G seine längliche Form beibehält. Sie bilden gleichzeitig definierte Knick- bzw. Biegestellen für den Traggurt G.

Die Fig. 5 zeigt die Haltevorrichtung im praktischen Einsatz an einem Röhrenmonitor M1. Das in der Tasche T befindliche Farbmessgerät MD ist dabei an der interessierenden Messstelle auf der Leuchtfläche des Monitors M1 angeordnet und der Traggurt G ist über den Monitor gelegt, so dass das Farbmessgerät MD am Traggurt G aufgehängt ist. Aufgrund des durch das Beschwerungsmaterial erhöhten Eigengewichts des Traggurts G bleibt dieser ausreichend bewegungsfest auf dem Monitor liegen und kann so das Farbmessgerät in seiner Postion festhalten. Gleichzeitig kann aber das Farbmessgerät einfach und bequem auf eine andere Messstelle des Monitors gesetzt werden. Es versteht sich, dass dass Eigengewicht des Traggurts G auf dasjenige des Farbmessgeräts MD abgestimmt sein muss, um eine ausreichende Balance zu ermöglichen. Der Traggurt kann an seiner Oberfläche mit erhöhter Oberflächenrauhigkeit (Reibungskoeffizient) ausgebildet sein, beispielsweise durch eine rippenartige Strukturierung. Alternativ oder zusätzlich kann der Traggurt auch zumindest teilweise mit einer Gummierung versehen sein, welche die Reibung zwischen dem Traggurt und den Auflagebereichen auf dem Monitor erhöht.

Je nach Grösse des Monitors oder allgemein Messobjekts, an welchem das Farbmessgerät eingesetzt wird, kann der relativ lange Traggurt G stören. Für diese Einsatzfälle ist der Traggurt G längenverstellbar ausgebildet. Er ist dazu mit zwei komplementären Stücken 6a und 6b eines Klettverschlusses versehen und kann, wie in Fig. 4 dargestellt, zusammengefaltet und mittels des Klettverschlusses in der zusammengefalteten Stellung fixiert werden. An Stelle des Klettverschlusses können natürlich auch andere Befestigungsmittel, z.B. Druckknöpfe oder dgl. vorgesehen sein.

Die Fig. 6 zeigt die gemäss vorstehenden Erläuterungen verkürzte bzw. zusammengefaltete Haltevorrichtung im praktischen Einsatz an einem Flachbildschirm M2. Durch die Verkürzung liegt der Traggurt G nicht an der Standfläche des Monitors auf, so dass sich das effektive Gegengewicht zum Farbmessgerät nicht verringert.

Die erfindungsgemässe Haltevorrichtung erfüllt zwei Funktionen. Zum einen erlaubt sie eine einfache Postionierung eines mobilen Farbmessgeräts am Messobjekt und zum anderen dient sie auch gleichzeitig als Tragriemen für das Gerät, und insbesondere in Kombination mit der Tasche auch noch als Schutz für das Farbmessgerät. Sie ist ausserdem einfach und bequem in der Handhabung und platzsparend.

## Patentansprüche

1. Anordnung zur Ausmessung und/oder Kalibrierung eines Messobjekts (M1, M2), mit folgenden Merkmalen:
einer Vorrichtung zur Halterung eines mobilen Farbmessgeräts (MD) an dem Messobjekt (M1, M2), insbesondere einem Monitor, mit einem flexiblen schlauchförmigen Traggurt (G), der wenigstens teilweise mit einem Beschwerungsmaterial (4) befüllt ist und mit einem Befestigungsorgan (1) zur Anbringung am Farbmessgerät (MD) ausgestattet ist; und
dem mobilen Farbmessgerät (MD);
wobei das Farbmessgerät (MD) am Traggurt (G) befestigt ist;
**dadurch gekennzeichnet, dass** der Traggurt (G) ausgebildet ist, um über das Messobjekt (M1, M2) gelegt werden zu können, wobei
der flexible schlauchförmige Traggurt (G) Unterteilungen (5) aufweist,
die definierte Knick- und/oder Biegestellen für den Traggurt (G) bilden, und die dafür sorgen, dass sich das Beschwerungsmaterial (4) im Traggurt (G) nicht unerwünscht verschiebt und dass der Traggurt (G) seine längliche Form beibehält, wobei der Traggurt auf Grund des durch das Beschwerungsmaterial erhöhten Eigengewichtes ausreichend bewegungsfest verbleibt und so das Farbmessgerät in seiner Position festhalten kann.

2. Anordnung nach Anspruch 1, **dadurch gekennzeichnet, dass** der Traggurt (G) im Wesentlichen als geschlossene Schlaufe ausgebildet ist.

3. Anordnung nach einem der vorangehenden Ansprüche, **dadurch gekennzeichnet, dass** der Traggurt (G) mit Mitteln (6a,6b) zur Längenverstellung ausgestattet ist.

4. Anordnung nach Anspruch 3, **dadurch gekennzeichnet, dass** die Mittel (6a,6b) zur Längenverstellung als Klettverschluss ausgebildet sind.

5. Anordnung nach einem der vorangehenden Ansprüche, **dadurch gekennzeichnet, dass** der Traggurt (G) mit einem fliessfähigen Material (4), insbesondere Sand befüllt ist.

6. Anordnung nach einem der Ansprüche 1-4, **dadurch gekennzeichnet, dass** der Traggurt (G) als zumindest teilweise mit einem Gel gefüllter Kunststoffschlauch ausgebildet ist.

7. Anordnung nach einem der vorangehenden Ansprüche, **dadurch gekennzeichnet, dass** der Traggurt (G) zumindest teilweise mit einer reibungserhöhenden Oberfläche, insbesondere einer Gummierung ausgestattet ist.

8. Anordnung nach einem der vorangehenden Ansprüche, **dadurch gekennzeichnet, dass** sie eine mit Mess- und Bedienungsöffnungen ausgestattete Tasche (T) zur Aufnahme des mobilen Farbmessgeräts (MD) aufweist und dass der Traggurt (G) an der Tasche (T) befestigt ist.

9. Anordnung nach Anspruch 8, **dadurch gekennzeichnet, dass** die Tasche (T) mit einem Reissverschluss (2) ausgestattet ist und dass der Traggurt (G) an einer Schliesse (2a) des Reissverschlusses befestigt ist.

10. Verfahren zur Halterung eines mobilen Farbmessgeräts (MD) an einem Messobjekt (M1, M2) aufweisend:
eine Anordnung nach irgendeinem der Ansprüche 1 bis 9 wird bereitgestellt;
das Farbmessgerät (MD) wird am Messobjekt (M1, M2) zur Ausmessung und/oder zur Kalibrierung des Messobjekts (M1, M2) befestigt;
der Traggurt wird über das Messobjekt (M1, M2) gelegt.

## Claims

1. Assembly for measuring and/or calibrating an object to be measured (M1, M2), said assembly having the following features:
an apparatus for supporting a mobile colorimeter (MD) on an object to be measured (M1, M2), in particular, on a monitor, said apparatus comprising a flexible tube-like carrying belt (G), which is at least partially filled with a loading material (4) and is equipped with a fixing member (1) for securing to the colorimeter (MD), and the mobile colorimeter (MD) ;
wherein the colorimeter (MD) is fastened to the carrying belt (G) ;
**characterized in that** the carrying belt (G) is designed in such a way that it can be laid over the object to be measured (M1, M2), wherein
the flexible tube-like carrying belt (G) comprises partitions (5),
which form defined folding points and/or bending points for the carrying belt (G) and that ensure that the loading material (4) in the carrying belt (G) is not displaced unintentionally and that the carrying belt (G) maintains its elongated shape, wherein owing to the increased intrinsic weight due to the loading material, the carrying belt remains sufficiently stationary and, thus, can secure the colorimeter in its position.

2. Assembly, as claimed in claim 1, **characterized in that** the carrying belt (G) is designed substantially as a closed loop.

3. Assembly, as claimed in any one of the preceding claims, **characterized in that** the carrying belt (G) is equipped with means (6a, 6b) for adjusting the length.

4. Assembly, as claimed in claim 3, **characterized in that** the means (6a, 6b) for adjusting the length are designed as a hook and loop fastener.

5. Assembly, as claimed in any one of the preceding claims, **characterized in that** the carrying belt (G) is filled with a free-flowing material (4), in particular, sand.

6. Assembly, as claimed in any one of the claims 1 to 4, **characterized in that** the carrying belt (G) is designed at least partially as a plastic tube filled with a gel.

7. Assembly, as claimed in any one of the preceding claims, **characterized in that** the carrying belt (G) is equipped at least partially with a friction increasing surface, in particular, a rubber coating.

8. Assembly, as claimed in any one of the preceding claims, **characterized in that** said assembly comprises a pocket (T), provided with measuring and operating apertures for receiving the mobile colorimeter (MD), and that the carrying belt (G) is fastened to the pocket (T).

9. Assembly, as claimed in claim 8, **characterized in that** the pocket (T) is equipped with a zipper (2), and that the carrying belt (G) is fastened to a closure (2a) of the zipper.

10. Method for supporting a mobile colorimeter (MD) on an object to be measured (M1, M2), said method comprising:
an assembly, as claimed in any one of the claims 1 to 9, is provided;
the colorimeter (MD) is fastened to the object to be measured (M1, M2), for measuring and/or calibrating the object to be measured (M1, M2);
the carrying belt is laid over the object to be measured (M1, M2) .

## Revendications

1. Ensemble servant à mesurer et/ou calibrer un objet devant être mesuré (M1, M2), ledit ensemble ayant les caractéristiques suivantes :
un appareil pour soutenir un colorimètre mobile (MD) sur un objet devant être mesuré (M1, M2), en particulier sur un moniteur, ledit appareil comprenant une ceinture de portage flexible en forme de tube (G), qui est au moins partiellement remplie avec une charge en matériau (4) et
est équipée avec un élément fixe (1) pour attacher le colorimètre (MD), et le colorimètre mobile (MD) ;
où le colorimètre (MD) est fixé à la ceinture de portage (G) ;
**caractérisé par le fait que** la ceinture de portage (G) est conçue de sorte à pouvoir être posée sur l'objet devant être mesuré (M1, M2), où
la ceinture de portage flexible en forme de tube (G) comprend des partitions (5),
qui forment des points de pliage et/ou des points flexibles définis pour la ceinture de portage (G) et qui assurent que la charge en matériau (4) dans la ceinture de portage (G) ne soit pas déplacée involontairement et que la ceinture de portage(G) conserve sa forme allongée, où du fait de l'augmentation de la masse intrinsèque due à la charge en matériau, la ceinture de portage reste suffisamment stationnaire et peut donc maintenir le colorimètre dans sa position.

2. Ensemble, selon la revendication 1, **caractérisé en ce que** la ceinture de portage (G) est conçue substantiellement comme une boucle fermée.

3. Ensemble, selon l'une quelconque des revendications précédentes, **caractérisé en ce que** la ceinture de portage (G) est équipée avec des moyens (6a, 6b) pour en ajuster la longueur.

4. Ensemble, selon la revendication 3, **caractérisé en ce que** les moyens (6a, 6b) pour ajuster la longueur sont conçus comme un fermoir à crochet et à boucle.

5. Ensemble, selon l'une quelconque des revendications précédentes, **caractérisé en ce que** la ceinture de portage (G) est chargée avec un matériau fluide (4), en particulier, du sable.

6. Ensemble, selon l'une quelconque des revendications 1 à 4, **caractérisé par** en ce que la ceinture de portage (G) est conçue au moins partiellement comme un tube en plastique rempli d'un gel.

7. Ensemble, selon l'une quelconque des revendications précédentes, **caractérisé en ce que** la ceinture de portage (G) est équipée au moins partiellement avec une surface augmentant la friction, en particulier, un revêtement de caoutchouc.

8. Ensemble, selon l'une quelconque des revendications précédentes, **caractérisé en ce que** ledit ensemble comprend une poche (T), fournie avec des ouvertures de mesure et de fonctionnement pour recevoir le colorimètre mobile (MD), et **en ce que** la ceinture de portage (G) est fixée à la poche (T).

9. Ensemble, selon la revendication 8, **caractérisé en ce que** la poche (T) est équipée avec une fermeture-éclair (2), et **en ce que** la ceinture de portage (G) est fixée à une fermeture (2a) de la fermeture-éclair.

10. Procédé pour soutenir un colorimètre mobile (MD) sur un objet devant être mesuré (M1, M2), ledit procédé comprenant :
un ensemble, selon l'une quelconque des revendications 1 à 9, lequel est fourni ;
le colorimètre (MD) est fixé à l'objet devant être mesuré (M1, M2), pour mesurer et/ou calibrer l'objet devant être mesuré (M1, M2) ;
la ceinture de portage est posée sur l'objet devant être mesuré (M1, M2).
